# EUROPEAN PATENT SPECIFICATION

(11) **EP 3 917 845 B1**
(45) Date of publication and mention of the grant of the patent: **05.03.2025**
(21) Application number: 20701873.0
(22) Date of filing: 21.01.2020
(51) Int. Cl.: B65B 35/46, B65G 47/74

(54) **APPARATUS AND METHOD FOR TRANSFERRING PODS OF A CONSUMABLE UNIT FOR AN INHALATION DEVICE FROM A STORAGE TRAY TO A MACHINE CASSETTE OF A CONSUMABLE UNIT MANUFACTURING DEVICE**
VORRICHTUNG UND VERFAHREN ZUM ÜBERFÜHREN VON KAPSELN EINER VERBRAUCHSEINHEIT FÜR EINE INHALATIONSVORRICHTUNG VON EINER ABLAGEPLATTE ZU EINER MASCHINENKASSETTE EINER VORRICHTUNG ZUM HERSTELLEN VON VERBRAUCHSEINHEITEN
APPAREIL ET PROCÉDÉ PERMETTANT DE TRANSFÉRER DES DOSETTES D'UNE UNITÉ CONSOMMABLE POUR DISPOSITIF D'INHALATION D'UN PLATEAU DE STOCKAGE À UNE CASSETTE DE MACHINE D'UN DISPOSITIF DE FABRICATION D'UNITÉ CONSOMMABLE

(30) Priority: 29.01.2019 GB 201901208
(43) Date of publication of application: 08.12.2021
(73) Proprietor: Nicoventures Trading Limited, London WC2R 3LA (GB)
(72) Inventor: BRAY, Andrew Jonathan, London WC2R 3LA (GB)
(74) Representative: Grey, Ian Michael
(86) International application number: PCT/GB2020/050122
(87) International publication number: WO 2020/157459

(56) References cited:
- CN-A- 107 265 121
- CN-A- 109 171 021
- CN-A- 109 205 297
- CN-U- 207 326 906

## Description

### Field

The present invention relates to an apparatus and a method for transferring pods, each of which form part of a consumable unit for use with an inhalation device, from a storage tray to a machine cassette of a consumable unit manufacturing device. In particular, the invention relates to an apparatus and a method for transferring pods, each of which are supported in a pod receiving pocket in the storage tray, to corresponding pod receiving pockets in a machine cassette. Once transferred, the machine cassette, together with the pods received therein, can be inserted into a consumable unit manufacturing device for carrying out one or more manufacturing steps on the pods. The invention also relates to an apparatus for transferring pods from a machine cassette back to a storage tray, and to a method of transferring pods from a storage tray to a machine cassette.

### Background

There exists a need to provide an apparatus and a method for the efficient manufacture of consumable units for inhalation devices which may involve providing a dose of aerosolisable material to a pod of the consumable unit; positioning a closure over an end of the pod; and securing the closure to the pod. These, and other manufacturing steps, may need to be carried out on a plurality of pods in quick succession.

The pods are supplied on a storage tray. The storage tray has pod receiving pockets each of which support an individual pod so that each tray supports a plurality of pods in a structured array. In order to perform various manufacturing steps on the pods, it is necessary to transfer them from the storage trays to a machine cassette. A machine cassette also has pod receiving pockets that correspond to the pod receiving pockets of the storage tray. The machine cassette is configured for insertion into a manufacturing machine to enable one or more of the manufacturing steps to be carried out on the pods whilst they are held in the machine cassette.

Once one or more manufacturing steps have been completed on the pods supported on the machine cassette, they may be transferred from the machine cassette back onto a storage tray.

It is known from CN109 205 297A to provide apparatus for transferring pods, each of which form part of a consumable unit for use with an inhalation device, from a storage tray in which each pod is supported in a pod receiving pocket, to a consumable unit manufacturing device.

### Summary

Apparatus for transferring pods according to the invention is characterised in that the apparatus transfers pods from said pod receiving pockets to corresponding pod receiving pockets of a machine cassette of said consumable unit manufacturing device, and in that the apparatus comprises
a transfer station to receive the tray and a machine cassette placed over the storage tray and the pods received in the storage tray, the transfer station being configured to rotate the combined tray and machine cassette so that the pods in said pod receiving pockets in the tray are transferred into corresponding pod receiving pockets in the machine cassette.

The apparatus of the invention may comprise a receiving station adjacent to the transfer station. The receiving station may be configured to receive a tray of pods such that, when a machine cassette has been placed on the tray over the pods, the tray is insertable, together with the pods and the machine cassette, from the receiving station into the transfer station.

The tray may be slideable, together with the pods and the machine cassette placed on the tray over the pods, directly from the receiving station into the transfer station.

In certain embodiments, the transfer station comprises a cradle to receive the tray and the machine cassette placed on the tray over the pods.

The cradle may be mounted for rotation about an axis. In particular, the cradle may be configured to rotate about said axis from a first position in which the tray with a machine cassette placed on it is insertable into the cradle, into a second position in which the combined tray and machine cassette inserted into the cradle are inverted.

The cradle may also be configured to rotate in the opposite direction about said axis, from said second position into the first position.

Preferably, the cradle is configured to rotate through an angle of 180 degrees between said first and second positions.

The cradle may comprise first and second support plates configured so that a storage tray of pods, with the machine cassette placed on the storage tray, is insertable into said transfer station between said first and second support plates when said cradle is in said first position.

The first and second support plates may be spaced such that, when the cradle is rotated about said axis, a tray of pods together with the machine cassette placed upon it, is supported by the first and second support plates to prevent separation of the tray and the machine cassette.

The cradle may be configured so that the tray of pods, together with the machine cassette placed over it, extends across the axis of rotation of the cradle when the tray of pods with the machine cassette placed over it is inserted into the cradle between the support plates.

The apparatus may comprise a drive member for rotating the cradle about said axis.

The drive member can be manually operable. In certain embodiments, the drive member may be a rotatable hand-wheel. In an alternative embodiment, the drive member may comprise a motor.

The apparatus may comprise an enclosure surrounding the cradle. The enclosure may be a cylindrical drum.

The drum may have a longitudinal axis and it can be configured to rotate together with the cradle about said longitudinal axis.

Preferably, the apparatus comprises a first stationary buffer and a stop element rotatable together with the enclosure. The stop element may be configured so that it contacts the first stationary buffer to prevent the cradle rotating beyond said first position.

The apparatus may additionally comprise a second stationary buffer. The second stationary buffer may be configured such that the stop element rotatable together with the enclosure contacts the second stationary buffer to prevent the cradle rotating beyond said second position.

The apparatus may comprise a slot in the enclosure to enable a tray with a machine cassette placed on it to be inserted into the transfer station through the slot.

In some embodiments, the
transfer station is also configured, after the combined storage tray and machine cassette have been rotated so that the pods in said pod receiving pockets in the tray have been transferred into the corresponding pod receiving pockets in the machine cassette, to rotate the combined machine cassette and storage tray so that the pods in said pod receiving pockets in the machine cassette are transferred back into corresponding pod receiving pockets in the storage tray.

In accordance with yet another embodiment of the invention, there is provided a method for transferring pods, each of which form part of a consumable unit for use with an inhalation device, from a storage tray in which each pod is supported in a pod receiving pocket, to corresponding pod receiving pockets of a machine cassette forming part of a consumable unit manufacturing device, comprising:
placing a machine cassette over a tray of pods,
inserting the machine cassette and the tray of pods into a transfer station, and
operating the transfer station to rotate the combined tray and machine cassette so that the pods in said pod receiving pockets in the tray transfer to corresponding pod receiving pockets in the machine cassette.

### Brief Description of the Drawings

Embodiments of the invention will be described, by way of example only, with reference to the accompanying drawings, in which:
FIGURE 1 shows a perspective view of apparatus for transferring pods from a storage tray to a machine cassette of a consumable unit manufacturing device;
   machine cassette.
FIGURE 2A shows a top plan view of part of the apparatus shown in Figure 1, and in which a storage tray of pods has been placed on the receiving station part of the apparatus;
FIGURE 2B shows the top plan view of Figure 2A, in which two machine cassettes have been placed on the receiving station over the storage tray and the pods supported on the storage tray;
FIGURE 2C shows a top plan view of the apparatus of Figure 1 with the combined storage tray and machine cassettes partially inserted into the transfer station;
FIGURE 2D shows the same view as Figure 2C, but after the combined storage tray and machine cassettes have been fully inserted into the transfer station, and the transfer station has been operated to invert the combined storage tray and machine cassettes;
FIGURE 3 shows a cross section through a pod and part of a machine cassette following transfer of the pod from a storage tray into the machine cassette;
FIGURE 4 shows a perspective view of the pod shown in Figure 3;
FIGURE 5 shows a schematic drawing of the pod of FIG. 4 being provided with a particulate material and a closure;
FIGURE 6 shows a dosing station to receive a machine cassette into which pods have been transferred and which fills the pods with particulate material; and
FIGURE 7 shows a part of the dosing station of Figure 6, with a machine cassette supported on the machine drawer.

### Detailed Description

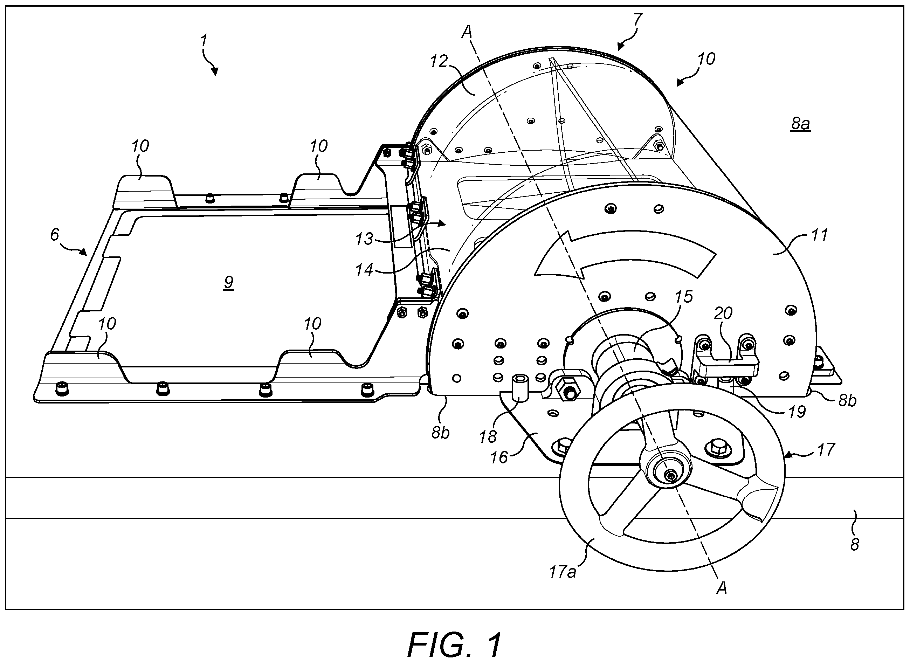

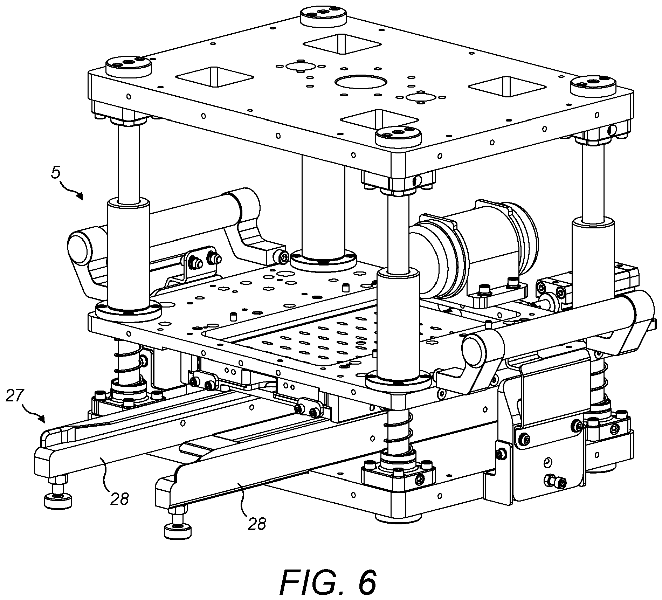

With reference to Figure 1, there is a shown an apparatus 1 for transferring a plurality of pods 2, each of which form part of a consumable unit for use with an inhalation device, from a storage tray 3 in which each pod 2 is supported in a pod receiving pocket 3a, to corresponding pod receiving pockets 4a of a machine cassette 4 forming part of a consumable unit manufacturing device 5 (see Figure 6). The apparatus 1, according to an embodiment of the invention, may also be used for transferring the pods 2, on which a manufacturing operation has been performed, from the machine cassette 4 back into a storage tray 3.

The pods 2 are placed in storage trays 3 following or during their manufacture at another location. The storage trays 3 are suitable for protecting and transporting the pods 2. However, in order to carry out a manufacturing operation on the pods 2, such as filling the pods 2 with a particulate material such as tobacco, they need to be transferred to a machine cassette 4 which is designed and configured to accurately hold and position the pods 2 within a consumable unit manufacturing device 5 during the manufacturing steps.

According to an embodiment of the invention, the apparatus 1 comprises a receiving station 6 and a transfer station 7, which may be mounted to the upper surface 8a of a table 8 or other support structure or frame. The table 8 has an aperture 8b and the transfer station 7 is mounted to the table 8 so that a portion of it extends into the aperture 8b below the upper surface 8a. The receiving station 6 is mounted to the upper surface 8a adjacent to the aperture 8b.

The receiving station 6 comprises a flat surface 9 with upstanding guide walls 10 along opposite edges that extend away from the transfer station 7. The flat surface 9 is a surface onto which one or more storage trays 3 of pods 2 may be placed and readied prior to moving them into the transfer station 7. The transfer station 7 comprises an enclosure 10 in the form of a generally cylindrical drum having circular end walls 11 and a curved intermediate wall 12 extending between the end walls 11. The drum 10 is mounted to the table 8 such that its longitudinal axis is parallel to, and spaced just above its upper surface 8a, and so that a portion of the drum 10 extends through the aperture 8b in the table 8. At least a part of the curved intermediate wall 12 extending between the circular end walls 11 may be transparent.

Received within the drum 10 is a cradle 13 which comprises a pair of spaced parallel support plates 14. The cradle 13 is mounted for rotation together with the drum 10 about the longitudinal axis A-A of the drum 10, although the drum 10 could be fixed, in which case the cradle 13 would rotate within, and relative to, the drum 10. As will be explained in more detail below, the cradle 13 is configured to receive and support a storage tray 3 that supports an array of individually spaced pods 2, each pod being loosely received and supported in a pocket 2a in the storage tray 3, together with a machine cassette 4 placed on the tray 3 over the pods 2. The support plates 14 support the storage tray 3 and the machine cassette 4 placed upon it when the transfer station 7 is operated to invert the combined tray 3 and machine cassette 4 so that the pods 2 in said pod receiving pockets 3a in the tray 3 are transferred into corresponding pod receiving pockets 4a in the machine cassette 4.

An axle extends along the longitudinal axis A-A of the drum 10 through a bearing hub 15 at each end of the drum 10. The axle is attached to the drum 10, and to the cradle 13, so that the drum 10 and cradle 13 rotate in response to rotation of the axle 14 about longitudinal axis A-A. Each bearing hub 15 is immovably mounted to the table 8 via a mounting member 16.

One end of the axle 14 extends beyond the edge of the upper surface 8a of the table 8 and a drive member 17 is attached to a free end of the axle 14 to facilitate rotation of the axle by a user. As shown in Figure 1, the drive member 17 is a manually rotatable hand wheel 17a. However, it will be appreciated that any other type of drive for rotating the drum 10 and the cradle 13 may be used, including an electric drive motor.

The mounting member 16 closest to the drive member 17a that rotatably mounts the axle and secures the drum 10 to the table 8, is provided with first and second buffers 18, 19. A stop element 20 is attached to the end wall 11 adjacent to the mounting member 16 so that one side of the stop element 20 contacts the first buffer 18 to prevent further rotation of the drum 10 when the drum 10 is in a first position, and the other side of the stop element 20 contacts the second buffer 19 when the drum 10 has been rotated into a second position. The angle of rotation between the first and second positions may be in the order of 180 degrees.

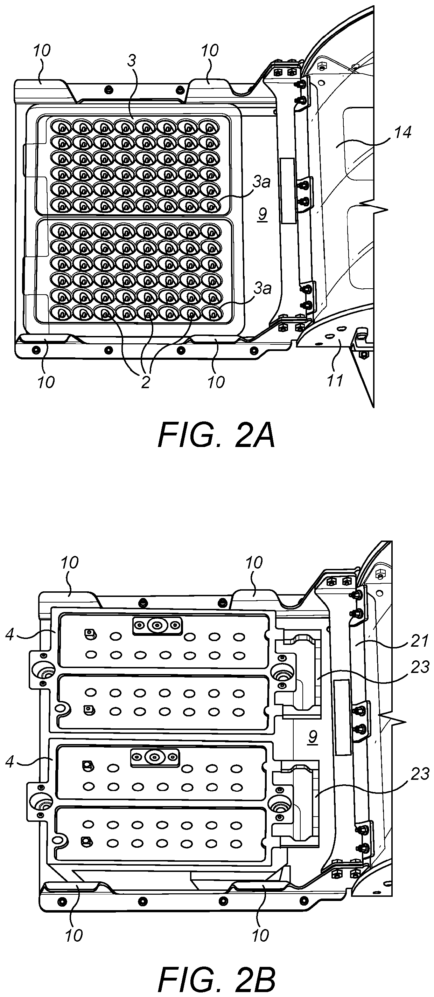

Operation of the apparatus 1 of the embodiment of the invention will now be described in more detail with reference to Figures 2A to 2E.

Figure 2A shows a top plan view of the receiving station 6 of the apparatus 1. A storage tray 3 of pods 2 has been placed on the flat surface 9 of the receiving station 6, between the guide walls 10.

In Figure 2A, two storage trays 3 are shown placed on the flat surface 9 of the receiving station 6 in side-by-side relation, between the guide walls 10. However, it will be appreciated that the apparatus 1 may be configured to receive one or more trays 3.

With reference to Figure 2B, a machine cassette 4 has been placed over each storage tray 3. The machine cassettes 4 and the trays 3 are configured so that a machine cassette 4 locates on the tray 3 with each individual pocket 4a in the machine cassette 4 located over a corresponding individual pocket 3a containing a pod 2 in the storage tray 3. The machine cassette 4 has a top and a bottom surface. When the machine cassette 4 is inserted into the consumable unit manufacturing device 5, it is is inserted with its top surface uppermost. However, it will be understood that, as shown in Figure 2B, the machine cassettes 4 are placed over the trays 3 in an upside down orientation, i.e. with their top surfaces facing the storage trays 3 and the pods 2 supported within the storage trays 3.

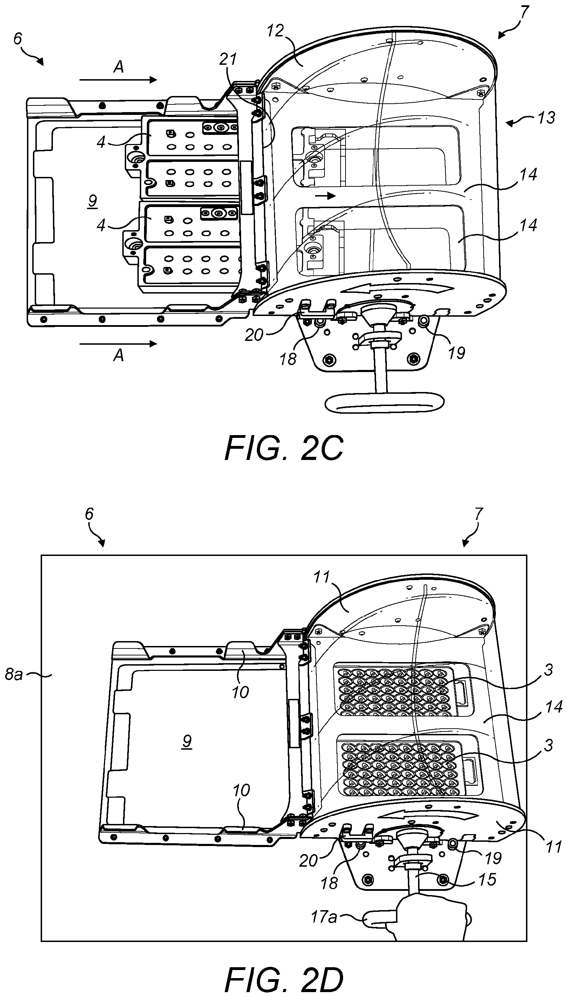

Once a machine cassette 4 has been correctly located over each tray 3, the combined storage tray 3, pods 2 and the machine cassette 4 are inserted together as a single unit into the transfer station 7. As shown in Figure 2C, the combined tray 3, pods 2 and the machine cassette 4 are slid directly from the flat surface 9 of the receiving station 6 into the transfer station 7 in the direction of arrow A.

In an alternate embodiment, the receving station 6 may be omitted. In this case, the machine cassette 4 may be placed over the tray 3 at another remote location before being inserted directly into the transfer station 7.

To facilitate the insertion of the combined storage tray 3, pods 2 and machine cassette 4 into the transfer station 7, the curved intermediate wall 12 of the drum 10 is provided with a slot 21 extending in an axial direction between the end walls 12. The slot 21 is aligned with the flat surface 9 of the receiving station 6 when the drum 10 is in its first position, i.e. when the stop element 20 is against the first buffer 18.

When the drum 10 is in its first position, the cradle 13 located within the drum 10 is positioned so that the combined storage tray 3, pods 2 and machine cassette 4 are pushed through the slot 21 into the cradle 13. More specifically, the combined storage tray 3, pods 2 and machine cassette 4 are pushed into the space between the spaced, parallel support plates 14 of the cradle 13. The support plates 14 are parallel and spaced from each other by a distance which is only marginally greater than the total height of a combined tray 3 containing the pods 2 with a machine cassette 4 placed upon it so that the combined storage tray 3, pods 2 and machine cassette 4 are held between the support plates 14 without separating when the transfer station 7 is operated to invert the combined storage tray 3, pods 2 and machine cassette 4.

Next, as shown in Figure 2D, the drive member 17 is rotated to rotate the drum 10 together with the cradle 13 and the combined storage tray 3, pods 2 and machine cassette 4, out of its first position and into its second position, in which the stop member 20 now contacts the second buffer 19. As a result of rotation from the first into the second position, the storage tray 3, pods 2 and the machine cassette 4 are inverted.

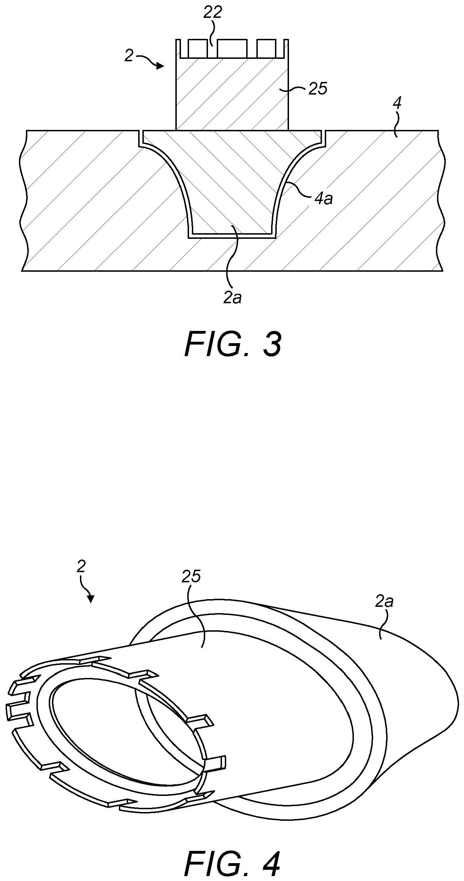

As the pods 2 are supported in the pockets 3a in the storage tray 3 under their own weight, inversion of the storage tray 3 results in each pod 2 transferring to a corresponding pocket 4a in the machine cassette 4 so that the pods 2 are now supported, the other way up, in the machine cassette 4. Figure 3 shows a cross section through a portion of a machine cassette 4 having a support pocket 4a and a pod 2 received in the pocket 4a following transfer from a storage tray 3 using the apparatus 1 according to an embodiment of the invention. Inversion of the storage tray 3 may occur when the combined storage tray 3, pods 2, and machine cassette 4 are turned over, i.e. rotated through an angle of 180 degrees. However, rotation through less than 180 degrees may be sufficient for the weight of the pods 2 to be transferred from the storage tray 3 to the machine cassette 4.

It will be understood that, when a machine cassette 4 is placed over a tray 3, the pods 2 supported in the pod receiving pockets 3a of the storage tray 3 may each extend from a pocket into a pocket of the machine cassette 4, i.e. a part of each pod may be received in a pocket 3a in the storage tray 3 and, at the same time, another part of the pod 2 may be received in a corresponding pocket 4a in the machine cassette 4. This means that, when the combined storage tray 3, pods 2 and machine cassette 4 are inverted, there is little or no movement of the pods 2 and their weight is simply transferred from the storage tray 3 to the machine cassette 4. However, it is also possible for a pod 2 to move, i.e. drop out of a pocket 3a in which it is supported on the storage tray 3, and into a corresponding pocket 4a in the machine cassette 4, when the combined storage tray 3, pods 2 and machine cassette 4 are inverted using the apparatus 1.

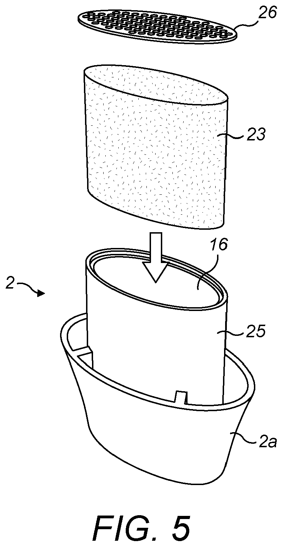

When the pods 2 are in the machine cassette 4, they are held in an upright orientation, with their open ends 22 directed vertically upwards so that they can be provided with particulate material and a closure 26 (see Figure 5) can be positioned on, and secured to, the pods 2. Figure 3 shows how one supporting pocket 4a is shaped to receive and support a pod 2. In particular, each supporting pocket 4a is shaped to receive and support a mouthpiece portion 2a of a pod 2 so that the open end 22 of the pod 2 is directed upwards.

Optionally, the machine cassette 4 may include one or more handles 23 for manual lifting and moving of the machine cassette 4.

Once the storage tray 3, pods 2 and machine cassette 4 have been inverted using the transfer station 7 of the apparatus 1, the combined storage tray 3, pods 2 and machine cassette 4 may be slid back out of the transfer station 7 onto the flat surface 9 of the receiving station 6. As the weight of the pods 2 is no longer supported by the storage tray 3, the storage tray 3 may be lifted away to leave the machine cassette 4 with the pods 2 supported therein. The machine cassette 4 together with the pods 2 may now be removed from the receiving station 6 and inserted into the consumable unit manufacturing device 5 so that a manufacturing operation may subsequently be performed on each of the pods 2 supported by the machine cassette 4.

It will be appreciated that, once the manufacturing operation or operations have been completed, the pods 2 may also be transferred from the machine cassette 4 back onto the storage trays 3 using the same apparatus 1, should this be required.

The pods 2 may form part of a consumable unit of an inhalation device which is of a size and shape suitable to be held by an adult consumer. The consumable unit may comprise a removable atomizer cartridge which has an atomizer for atomizing a consumable liquid held in the cartridge, and a charge 23 of particulate aerosolisable tobacco. A charge of tobacco 23 may be received in a pod 2 having a mouthpiece portion 2a, to which a closure 26 for retaining the charge of tobacco 23 within the pod 2 is attached, as demonstrated by Figure 5.

The user is able to change the atomizer cartridge and the charge of tobacco 23 when they need replacement, i.e. when the consumable liquid runs out, or when the charge of tobacco is exhausted.

In use, an operating unit delivers energy to the atomizer cartridge under the control of the consumer as the consumer draws air through the inhalation device. The liquid in the atomizer cartridge is atomized to form an aerosol and the particulate tobacco material is volatilized, releasing volatile flavours. The air inhaled from the inhalation device therefore delivers an aerosol of atomised liquid from the atomizer cartridge to the consumer together with the vapour generated by heating the particulate tobacco material.

In addition to a mouthpiece portion 2a, the pod 2 of Figures 3 to 5 comprises an axially-extending open-ended section 25. In this example, the open-ended section 25 has an elliptical radial cross-section. The mouthpiece portion 2a is connected to the open-ended section 25 by ultrasonic welding, induction welding or any other suitable method. Alternatively, the mouthpiece portion 2a may be integrally formed with the open-ended section 25, for example by injection moulding.

The closure 26 may be in the form of a perforated screen. The closure 26 is composed for example of a mesh or foil or a moulding of plastics material. Perforations in the closure 26 allow vapour to pass in the axial direction downstream through the pod 2 towards the mouthpiece portion 2a.

The manufacturing steps carried out on pods 2 whilst they are supported in a machine cassette 4 may include providing the pod 2 with a dose of particulate material through the open ended section 25, positioning a closure 26 over the open-ended section 25 of the pod 2, and securing the closure 26 to the pod 2.

The manufacturing steps may be carried out on a number of empty pods 2 using the manufacturing device 5 shown in Figure 6, or a series of devices 5 similar to that shown in Figure 6. For example, one device 5 may be a dosing station, a second device 5 may be a closure positioning station, and a third device 5 may be a closure securing station. The machine cassette 4 supporting a plurality of pods 2 is inserted into each device 5 in turn so that a charge of tobacco 23 may be dosed into the pod 2, a closure 26 may be positioned on the open-ended section 25 of the pod 2, and the closure 26 may be secured to the pod 2.

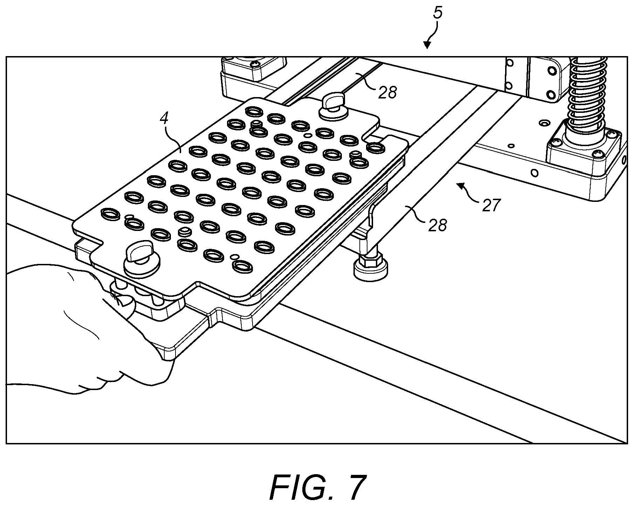

The manufacturing device 5 of Figure 6 may comprise, for example, a machine cassette support 27 that comprises rails 28 to support the machine cassette 4 supporting a plurality of pods 2. The machine cassette 4 can be inserted into the dosing station by sliding the machine cassette 4 onto the rails 28, which support opposing sides of the machine cassette 4. The machine cassette support 27 may also include a stop against which the machine cassette 4 abuts when inserted into the machine cassette support 27. The machine cassette support 27 ensures that the machine cassette 4, and the pods 2, are accurately and reliably positioned and supported within the manufacturing device 5. Figure 7 shows a part of the dosing station of Figure 6, with a machine cassette 4 supported on the rails 28 of the machine cassette support 27.

The machine cassette 4 provided with a plurality of empty pods 2 is moved through the apparatus of Figure 6 so that the pods 2 are provided with a dose of particulate material and the closures 26 are positioned and secured while the pods 2 are held in the machine cassette 4.

As used herein, reference to a charge of tobacco refers to a material that includes tobacco, tobacco derivatives, expanded tobacco, reconstituted tobacco, or tobacco substitutes. The particulate material may also include a non-tobacco material. In some examples, the charge is a charege of particulate material that is powder-like, and in alternative examples may be formed by cutting of shredding a material into smaller particles. In some examples, the charge of tobacco may include a so-called 'cut rag', which is formed by shredding or cutting tobacco into small particles. The charge of tobacco may be produced by extruding a tobacco slurry and cutting the extruded material into particles.

It will be appreciated that the pods 2 described above may be used in devices other than a inhalation device as described. For example, the device may releases compounds from the charge of tobacco without burning, such as tobacco heating products. The inhalation device may be a heating device which releases compounds by heating, but not burning, a substrate material, for example the charge of tobacco.

In order to address various issues and advance the art, the entirety of this disclosure shows by way of illustration various embodiments in which the claimed invention as defined by the appended claims may be practiced and provide for superior method and apparatus for transferring pods, each of which form part of a consumable unit for use with an inhalation device, from a storage tray in which each pod is supported in a pod receiving pocket, to corresponding pod receiving pockets of a machine cassette forming part of a consumable unit manufacturing device. The advantages and features of the disclosure are of a representative sample of embodiments only.

They are presented only to assist in understanding and teach the claimed features. It is to be understood that advantages, embodiments, examples, functions, features, structures, and/or other aspects of the disclosure are not to be considered limitations on the disclosure as defined by the appended claims, and that other embodiments may be utilised and modifications may be made without departing from the scope of the invention as defined by the appended claims.

## Claims

1. Apparatus for transferring pods (2), each of which form part of a consumable unit for use with an inhalation device, from a storage tray (3) in which each pod (2) is supported in a pod receiving pocket (3a), to a consumable unit manufacturing device (5),
**characterised in that** the apparatus is adapted to transfer pods from said pod
receiving pockets to corresponding pod receiving pockets of a machine cassette of said consumable unit manufacturing device, and **in that**
the apparatus comprises:
a transfer station (7) to receive the storage tray (3) and a machine cassette (4) placed over the storage tray (3) wherein the pods (2) are received in the storage tray (3), the transfer station (7) being configured to rotate the combined storage tray (3) and machine cassette (4) so that the pods (2) in said pod receiving pockets (3a) in the tray (3) are transferred into corresponding pod receiving pockets (4a) in the machine cassette (4).

2. Apparatus according to claim 1, comprising a receiving station (6) adjacent to the transfer station (7), the receiving station (6) being configured to receive a storage tray (3) of pods (2) such that, when a machine cassette (4) has been placed on the storage tray (3) over the pods (2), the tray (3) is insertable, together with the pods (2) and the machine cassette (4), from the receiving station (6) into the transfer station (7).

3. Apparatus according to claim 2, wherein the tray (3) is slidable, together with the pods (2) and the machine cassette (4) placed on the tray (3) over the pods (2), from the receiving station (6) into the transfer station (7).

4. Apparatus according to any preceding claim, wherein the transfer station (7) comprises a cradle (13) to receive the storage tray (3) wherein the machine cassette (4) is placed on the storage tray (3) over the pods (2).

5. Apparatus according to claim 4, wherein said cradle (13) is mounted for rotation about an axis.

6. Apparatus according to claim 5, wherein the cradle (13) is configured to rotate about said axis, preferably through an angle of 180 degrees, from a first position in which the storage tray (3) with a machine cassette (4) placed on it is insertable into the cradle (13), into a second position in which the combined storage tray (3) and machine cassette (4) inserted into the cradle (13) are inverted.

7. Apparatus according to claim 6, wherein the cradle (13) is also configured to rotate, in the opposite direction, about said axis from said second position into the first position.

8. Apparatus according to claims 6 or 7, wherein the cradle (13) comprises first and second support plates (14) configured so that a storage tray (3) of pods (2), with the machine cassette (4) placed on the storage tray (3), is insertable into said transfer station (7) between said first and second support plates (14) when said cradle (13) is in said first position.

9. Apparatus according to claim 8, wherein the first and second support plates (14) are spaced such that, when the cradle (13) is rotated about said axis, a storage tray (3) of pods (2) together with the machine cassette (4) placed upon it, is supported by the first and second support plates (14) to prevent separation of the storage tray (3) and the machine cassette (4).

10. Apparatus according to any of claims 6 to 9, wherein the cradle (13) is configured so that the storage tray (3) of pods (2), together with the machine cassette (4) placed over it, extends across the axis of rotation of the cradle (13) when the storage tray (3) of pods (2) with the machine cassette (4) placed over it is inserted into the cradle (13) between the support plates (14).

11. Apparatus according to any of claims 5 to 10, comprising a drive member (17) for rotating the cradle (13) about said axis, said drive member (17) being manually operable, and preferably comprising a rotatable hand-wheel (17a), or said drive member (17) comprises a motor.

12. Apparatus according to any of claims 5 to 11, comprising an enclosure, preferably in the form of a cylindrical drum (10), surrounding the cradle (13).

13. Apparatus according to claim 12, wherein the enclosure is in the form of a cylindrical drum (10), the drum (10) having a longitudinal axis and being configured to rotate together with the cradle (13) about said longitudinal axis.

14. Apparatus according to claims 12 or 13, comprising a first stationary buffer (18) and a stop element (20) rotatable together with the enclosure that contacts the first stationary buffer (18) to prevent the cradle (13) rotating beyond said first position.

15. Apparatus according to any of claims 12 to 14, comprising a second stationary buffer (19) configured such that the stop element (20) rotatable together with the enclosure contacts the second stationary buffer (20) to prevent the cradle (13) rotating beyond said second position.

16. Apparatus according to any of claims 12 to 14, comprising a slot (21) in the enclosure to enable a storage tray (3) with a machine cassette (4) placed on it to be inserted into the transfer station (7) through the slot (21).

17. Apparatus according to claim 1,
wherein the transfer station (7) is also configured, after the combined storage tray (3) and machine cassette (4) have been rotated so that the pods (2) in said pod receiving pockets (3a) in the tray (3) have been transferred into the corresponding pod receiving pockets (4a) in the manchine cassette (4), to rotate the combined machine cassette (4) and storage tray (3) so that the pods (2) in said pod receiving pockets (4a) in the machine cassette (4) are transferred back into corresponding pod receiving pockets (3a) in the storage tray (3).

18. A method for transferring pods, each of which form part of a consumable unit for use with an inhalation device, from a storage tray (3) in which each pod (2) is supported in a pod receiving pocket (3a), to corresponding pod receiving pockets (4a) of a machine cassette (4) forming part of a consumable unit manufacturing device, comprising:
placing a machine cassette (4) over a storage tray (3) of pods (2),
inserting the machine cassette (4) and the storage tray (3) of pods (2) into a transfer station (7), and
operating the transfer station (7) to rotate the combined storage tray (3) and machine cassette (4) so that the pods (2) in said pod receiving pockets (3a) in the tray (3) transfer to corresponding pod receiving pockets (4a) in the machine cassette (4).

## Patentansprüche

1. Vorrichtung zum Übergeben von jeweils zu einer Verbrauchseinheit gehörenden Kapseln (2) zur Verwendung mit einer Inhalationsvorrichtung von einer Ablageplatte (3), in der jede Kapsel (2) in einer Kapselaufnahmetasche (3a) gelagert ist, zu einer Vorrichtung zur Herstellung von Verbrauchseinheiten (5),
**dadurch gekennzeichnet, dass** die Vorrichtung so konfiguriert ist, dass sie Kapseln zu entsprechenden Kapselaufnahmetaschen einer Maschinenkassette zur genannten Vorrichtung zur Herstellung von Verbrauchseinheiten übergibt, und dass die Vorrichtung Folgendes umfasst:
eine Übergabestation (7) zur Aufnahme der Ablageplatte (3) und eine über der Ablageplatte (3) platzierte Maschinenkassette (4), wobei die Kapseln (2) in der Ablageplatte (3) aufgenommen sind, wobei die Übergabestation (7) so konfiguriert ist, dass sie die kombinierte Ablageplatte (3) und die Maschinenkassette (4) so dreht, dass die Kapseln (2) in den Kapselaufnahmetaschen (3a) in der Ablageplatte (3) in entsprechende Kapselaufnahmetaschen (4a) in der Maschinenkassette (4) übergeben werden.

2. Vorrichtung nach Anspruch 1, mit einer der Übergabestation (7) benachbarten Aufnahmestation (6), wobei die Aufnahmestation (6) so konfiguriert ist, dass sie eine Ablageplatte (3) von Kapseln (2) derart aufnimmt, dass, wenn eine Maschinenkassette (4) auf die Ablageplatte (3) über die Kapseln (2) platziert worden ist, die Ablageplatte (3) zusammen mit den Kapseln (2) und der Maschinenkassette (4) von der Aufnahmestation (6) in die Übergabestation (7) übergeben werden kann.

3. Vorrichtung nach Anspruch 2, wobei die Ablageplatte (3) zusammen mit den Kapseln (2) und der auf der Ablageplatte (3) über den Kapseln (2) platzierten Maschinenkassette (4) von der Aufnahmestation (6) in die Übergabestation (7) verschoben werden kann.

4. Vorrichtung nach einem der vorhergehenden Ansprüche, wobei die Übergabestation (7) eine Halterung (13) zum Aufnehmen der Ablageplatte (3) umfasst, wobei die Maschinenkassette (4) auf der Ablageplatte (3) über den Kapseln (2) platziert ist.

5. Vorrichtung nach Anspruch 4, wobei die Halterung (13) um eine Achse drehbar gelagert ist.

6. Vorrichtung nach Anspruch 5, wobei die Halterung (13) so konfiguriert ist, dass sie um die Achse gedreht werden kann, vorzugsweise in einem Winkel von 180 Grad, von einer ersten Position, in der die Ablageplatte (3) mit einer darauf platzierten Maschinenkassette (4) in die Halterung (13) eingeführt werden kann, in eine zweite Position, in der die kombinierte Ablageplatte (3) und die in die Halterung (13) eingeführte Maschinenkassette (4) umgedreht sind.

7. Vorrichtung nach Anspruch 6, wobei die Halterung (13) ferner so konfiguriert ist, dass sie in entgegengesetzter Richtung um die Achse von der zweiten Position in die erste Position gedreht werden kann.

8. Vorrichtung nach Anspruch 6 oder 7, wobei die Halterung (13) die erste und zweite Trägerplatte (14) umfasst, die so konfiguriert sind, dass eine Ablageplatte (3) von Kapseln (2) mit der auf der Ablageplatte (3) platzierten Maschinenkassette (4) in die Übergabestation (7) zwischen der ersten und zweiten Trägerplatte (14) eingeführt werden kann, wenn sich die Halterung (13) in der ersten Position befindet.

9. Vorrichtung nach Anspruch 8, wobei die erste und die zweite Trägerplatte (14) derart beabstandet sind, dass bei Drehung der Halterung (13) um die Achse eine Ablageplatte (3) von Kapseln (2) zusammen mit der darauf platzierten Maschinenkassette (4) von der ersten und der zweiten Trägerplatte (14) gestützt wird, um ein Trennen der Ablageplatte (3) und der Maschinenkassette (4) zu verhindern.

10. Vorrichtung nach einem der Ansprüche 6 bis 9, wobei die Halterung (13) so konfiguriert ist, dass sich die Ablageplatte (3) von Kapseln (2) zusammen mit der darüber platzierten Maschinenkassette (4) über die Drehachse der Halterung (13) erstreckt, wenn die Ablageplatte (3) von Kapseln (2) mit der darüber platzierten Maschinenkassette (4) in die Halterung (13) zwischen den Trägerplatten (14) eingeführt ist.

11. Vorrichtung nach einem der Ansprüche 5 bis 10, umfassend ein Antriebselement (17) zum Drehen der Halterung (13) um die genannte Achse, wobei das genannte Antriebselement (17) manuell betätigt werden kann, und vorzugsweise umfassend ein drehbares Handrad (17a), oder das Antriebselement (17) umfasst einen Motor.

12. Vorrichtung nach einem der Ansprüche 5 bis 11, umfassend ein die Halterung (13) umgebendes Gehäuse, vorzugsweise in Form einer zylindrischen Trommel (10).

13. Vorrichtung nach Anspruch 12, wobei das Gehäuse die Form einer zylindrischen Trommel (10) hat und die Trommel (10) eine Längsachse hat und so konfiguriert ist, dass sie sich zusammen mit der Halterung (13) um diese Längsachse dreht.

14. Vorrichtung nach Anspruch 12 oder 13, umfassend einen ersten stationären Puffer (18) und ein Anschlagelement (20), das zusammen mit dem Gehäuse gedreht werden kann und den ersten stationären Puffer (18) kontaktiert, um zu verhindern, dass sich die Halterung (13) über die erste Position hinaus dreht.

15. Vorrichtung nach einem der Ansprüche 12 bis 14, umfassend einen zweiten stationären Puffer (19), der so konfiguriert ist, dass das Anschlagelement (20), das zusammen mit dem Gehäuse gedreht werden kann, den zweiten stationären Puffer (20) kontaktiert, um zu verhindern, dass sich die Halterung (13) über die zweite Position hinaus dreht.

16. Vorrichtung nach einem der Ansprüche 12 bis 14, umfassend einen Schlitz (21) im Gehäuse, damit eine Ablageplatte (3) mit einer darauf platzierten Maschinenkassette (4) durch den Schlitz (21) in die Übergabestation (7) eingeführt werden kann.

17. Vorrichtung nach Anspruch 1,
wobei die Übergabestation (7) ferner so konfiguriert ist, nach dem Drehen der kombinierten Ablageplatte (3) und der Maschinenkassette (4), dass die Kapseln (2) in den Kapselaufnahmetaschen (3a) in der Platte (3) in die entsprechenden Kapselaufnahmetaschen (4a) in der Maschinenkassette (4) übergeben worden sind, die kombinierte Maschinenkassette (4) und die Ablageplatte (3) so zu drehen, dass die Kapseln (2) in den Kapselaufnahmetaschen (4a) in der Maschinenkassette (4) zurück in entsprechende Kapselaufnahmetaschen (3a) in der Ablageplatte (3) übergeben werden.

18. Verfahren zum Übergeben von jeweils zu einer Verbrauchseinheit gehörenden Kapseln zur Verwendung mit einem Inhalationsgerät von einer Ablageplatte (3), in der jede Kapsel (2) in einer Kapselaufnahmetasche (3a) gelagert ist, zu entsprechenden Kapselaufnahmetaschen (4a) einer Maschinenkassette (4), die Teil einer Vorrichtung zur Herstellung von Verbrauchseinheiten ist, umfassend:
Platzieren einer Maschinenkassette (4) über einer Ablageplatte (3) von Kapseln (2),
Einführen der Maschinenkassette (4) und der Ablageplatte (3) von Kapseln (2) in eine Übergabestation (7), und
Betätigen der Übergabestation (7) zum Drehen der kombinierten Ablageplatte (3) und der Maschinenkassette (4), sodass die in den Kapselaufnahmetaschen (3a) der Ablageplatte (3) befindlichen Kapseln (2) in entsprechende Kapselaufnahmetaschen (4a) der Maschinenkassette (4) übergeben werden.

## Revendications

1. Appareil de transfert de dosettes (2), dont chacune fait partie d'une unité consommable destinée à être utilisée avec un dispositif d'inhalation, depuis un plateau de stockage (3) dans lequel chaque dosette (2) est supportée dans une poche de réception de dosette (3a), vers un dispositif de fabrication d'unité consommable (5),
**caractérisé en ce que** l'appareil est adapté pour transférer des dosettes depuis lesdites poches de réception de dosette vers des poches de réception de dosette correspondantes d'une cassette de machine dudit dispositif de fabrication d'unités consommables, et **en ce que** l'appareil comprend :
une station de transfert (7) pour recevoir le plateau de stockage (3) et une cassette de machine (4) placée sur le plateau de stockage (3), dans lequel les dosettes (2) sont reçues dans le plateau de stockage (3), la station de transfert (7) étant configurée pour faire pivoter le plateau de stockage (3) et la cassette de machine (4) combinés de sorte que les dosettes (2) dans lesdites poches de réception de dosette (3a) dans le plateau (3) soient transférées dans des poches de réception de dosette correspondantes (4a) dans la cassette de machine (4).

2. Appareil selon la revendication 1, comprenant une station de réception (6) adjacente à la station de transfert (7), la station de réception (6) étant configurée pour recevoir un plateau de stockage (3) de dosettes (2) de telle sorte que, lorsqu'une cassette de machine (4) a été placée sur le plateau de stockage (3) au-dessus des dosettes (2), le plateau (3) peut être inséré, en même temps que les dosettes (2) et la cassette de machine (4), depuis la station de réception (6) vers la station de transfert (7).

3. Appareil selon la revendication 2, dans lequel le plateau (3) peut coulisser, en même temps que les dosettes (2) et la cassette de machine (4) placées sur le plateau (3) au-dessus des dosettes (2), depuis la station de réception (6) vers la station de transfert (7).

4. Appareil selon une quelconque revendication précédente, dans lequel la station de transfert (7) comprend un berceau (13) pour recevoir le plateau de stockage (3) dans lequel la cassette de machine (4) est placée sur le plateau de stockage (3) au-dessus des dosettes (2).

5. Appareil selon la revendication 4, dans lequel ledit berceau (13) est monté pour pivoter autour d'un axe.

6. Appareil selon la revendication 5, dans lequel le berceau (13) est configuré pour pivoter autour dudit axe, de préférence sur un angle de 180 degrés, depuis une première position dans laquelle le plateau de stockage (3) au-dessus duquel est placée une cassette de machine (4) peut être inséré dans le berceau (13), vers une seconde position dans laquelle le plateau de stockage (3) et la cassette de machine (4) combinés insérés dans le berceau (13) sont inversés.

7. Appareil selon la revendication 6, dans lequel le berceau (13) est également configuré pour pivoter, dans la direction opposée, autour dudit axe depuis ladite seconde position vers la première position.

8. Appareil selon les revendications 6 ou 7, dans lequel le berceau (13) comprend des première et seconde plaques de support (14) configurées de telle sorte qu'un plateau de stockage (3) de dosettes (2), la cassette de machine (4) étant placée sur le plateau de stockage (3), puisse être inséré dans ladite station de transfert (7) entre lesdites première et seconde plaques de support (14) lorsque ledit berceau (13) est dans ladite première position.

9. Appareil selon la revendication 8, dans lequel les première et seconde plaques de support (14) sont espacées de telle sorte que, lorsque le berceau (13) est pivoté autour dudit axe, un plateau de stockage (3) de dosettes (2) en même temps que la cassette de machine (4) placée dessus, sont supportés par les première et seconde plaques de support (14) pour empêcher la séparation du plateau de stockage (3) et de la cassette de machine (4).

10. Appareil selon l'une quelconque des revendications 6 à 9, dans lequel le berceau (13) est configuré de sorte que le plateau de stockage (3) de dosettes (2), en même temps que la cassette de machine (4) placée dessus, se prolonge à travers l'axe de rotation du berceau (13) lorsque le plateau de stockage (3) de dosettes (2) au-dessus duquel est placée la cassette de machine (4) est inséré dans le berceau (13) entre les plaques de support (14).

11. Appareil selon l'une quelconque des revendications 5 à 10, comprenant un élément d'entraînement (17) destiné à faire pivoter le berceau (13) autour dudit axe, ledit élément d'entraînement (17) pouvant être actionné manuellement, et comprenant de préférence un volant rotatif (17a), ou ledit élément d'entraînement (17) comprend un moteur.

12. Appareil selon l'une quelconque des revendications 5 à 11, comprenant une enceinte, de préférence sous la forme d'un tambour cylindrique (10), entourant le berceau (13).

13. Appareil selon la revendication 12, dans lequel l'enceinte se présente sous la forme d'un tambour cylindrique (10), le tambour (10) présentant un axe longitudinal et étant configuré pour pivoter en même temps que le berceau (13) autour dudit axe longitudinal.

14. Appareil selon les revendications 12 ou 13, comprenant un premier tampon stationnaire (18) et un élément d'arrêt (20) pouvant pivoter en même temps que l'enceinte qui entre en contact avec le premier tampon stationnaire (18) pour empêcher le berceau (13) de pivoter au-delà de ladite première position.

15. Appareil selon l'une quelconque des revendications 12 à 14, comprenant un second tampon stationnaire (19) configuré de telle sorte que l'élément d'arrêt (20) pouvant pivoter en même que l'enceinte entre en contact avec le second tampon stationnaire (20) pour empêcher le berceau (13) de pivoter au-delà de ladite seconde position.

16. Appareil selon l'une quelconque des revendications 12 à 14, comprenant une fente (21) dans l'enceinte pour permettre à un plateau de stockage (3) au-dessus duquel est placée une cassette de machine (4) d'être inséré dans la station de transfert (7) à travers la fente (21).

17. Appareil selon la revendication 1,
dans lequel la station de transfert (7) est également configurée, après que le plateau de stockage (3) et la cassette de machine (4) combinés ont été pivotés de sorte que les dosettes (2) dans lesdites poches de réception de dosette (3a) dans le plateau (3) ont été transférées dans les poches de réception de dosette correspondantes (4a) dans la cassette de machine (4), pour faire pivoter la cassette de machine (4) et le plateau de stockage (3) combinés de sorte que les dosettes (2) dans lesdites poches de réception de dosette (4a) dans la cassette de machine (4) soient transférées à nouveau dans les poches de réception de dosette correspondantes (3a) dans le plateau de stockage (3).

18. Procédé de transfert de dosettes, dont chacune fait partie d'une unité consommable destinée à être utilisée avec un dispositif d'inhalation, depuis un plateau de stockage (3) dans lequel chaque dosette (2) est supportée dans une poche de réception de dosette (3a), vers des poches de réception de dosette correspondantes (4a) d'une cassette de machine (4) faisant partie d'un dispositif de fabrication d'unité consommable, comprenant :
le placement d'une cassette de machine (4) au-dessus d'un plateau de stockage (3) de dosettes (2),
l'insertion de la cassette de machine (4) et du plateau de stockage (3) des dosettes (2) dans une station de transfert (7), et
le fonctionnement de la station de transfert (7) pour faire pivoter le plateau de stockage (3) et la cassette de machine (4) combinés de sorte que les dosettes (2) dans lesdites poches de réception de dosette (3a) dans le plateau (3) soient transférées vers les poches de réception de dosette correspondantes (4a) dans la cassette de machine (4).
